# EUROPÄISCHE PATENTANMELDUNG

(11) **EP 3 184 567 A1**
(43) Veröffentlichungstag der Anmeldung: **28.06.2017**
(21) Anmeldenummer: 15201639.0
(22) Anmeldetag: 21.12.2015
(51) Int. Cl.: C08G 18/75, C09D 175/14, C09J 175/14, C08F 290/06, C09D 175/16, C09J 175/16

(54) **ACRYLATTERMINIERTE URETHANPOLYBUTADIENE AUS MONOMERARMEN 1:1 MONOADDUKTEN AUS REAKTIVEN OLFINISCHEN VERBINDUNGEN UND DIISOCYANATEN UND HYDROXYTERMINIERTEN POLYBUTADIENEN**

(71) Anmelder: Evonik Degussa GmbH, 45128 Essen (DE)
(72) Erfinder: RAMON-GIMENEZ, Laura, 45134 Essen (DE); HABERKORN, Niko, 46286 Dorsten (DE); KRANNIG, Kai-Steffen, 44137 Dortmund (DE); WU, Hsin-Ho, 31054 Hsinchu County (TW); STEIGER, Juergen, 11147 Taipei City (TW); SUN, Tung-Yi, 10557 Taipei (TW)

(57) **Zusammenfassung**

Diese Erfindung betrifft acrylatterminierte Urethanpolybutadiene aus monomerarmen 1 : 1 Monoaddukten aus reaktiven olefinischen Verbindungen und Diisocyanaten und hydroxyterminierten Polybutadienen, sowie ein Verfahren zur Herstellung.

## Beschreibung

Diese Erfindung betrifft acrylatterminierte Urethanpolybutadiene aus monomerarmen 1 : 1 Monoaddukten aus reaktiven olefinischen Verbindungen und Diisocyanaten und hydroxyterminierten Polybutadienen, sowie ein Verfahren zur Herstellung.

### Stand der Technik

Die Herstellung von acrylatterminierten Urethanpolybutadienen ist in der Patentliteratur schon seit Ende der sechziger Jahre des letzten Jahrhunderts beschrieben worden. Japan Soda beschreibt in mehreren Patenten, z.B. DE1944015, die Herstellung von solchen funktionalisierten Polybutadienen. Auch in US3855379, DE2244918A1, JP49117588A, JP49117595A, JP50153088A, JP50153091A, JP50150792A, GB1575584A, DE2702708A1, DE2737174A1, DE2821500A1, JP56060441A, BR8101674A, JP59021544A, CA1253289A1, JP60195150A, JP60151260A, JP61006155A, JP61021120A, JP60195038A, JP61123649A werden solche Produkte erwähnt. In Patent JP2002371101A wurde die Benutzung von Zinn-Katalysatoren veröffentlicht, in Patent EP2910578A1 und in Patent US8822600B2 wurden Organoaluminium, Organozink und entsprechend Organobismuth und Organozirkonium als Katalysatoren benutzt. Hier scheinen solche Katalysatoren versus Sn haltige Katalysatoren von Vorteil zu sein aufgrund des niedrigen Anstiegs der Viskosität in Abhängigkeit der Zeit. Auch heute noch gibt es einen Bedarf für neue acrylatterminierte Urethanpolybutadiene mit bisher nicht beobachteten Eigenschaften.

Die Vielseitigkeit von Polymeren kann einen direkten Einfluss auf die Vielseitigkeit ihrer physikalischen Eigenschaften haben. Diese spiegelt die Fortschritte in der molekularen Synthese und dem Design im Laufe der Jahre wider. Mit anderen Worten haben synthetische Polymere zahlreiche einstellbare Eigenschaften, die ihren Gebrauch auf verschiedenen Technologieplattformen berücksichtigen. Diese einstellbaren Eigenschaften können optimiert werden, sobald das Polymer groß genug ist und/oder es eine Molmasseverteilung hat, die eng genug ist.

Eine der Hauptbeschränkungen der gegenwärtigen Polymerisationsverfahren oder polymeranalogen Umsetzungen besteht darin, dass einzelnen Polymerketten nur selten die gleichen Polymerisationsgrade und Molmassen behalten. Mit anderen Worten, Polymerisationsreaktionen und viele polymeranaloge Umsetzungsreaktionen erzeugen typischerweise eine Verteilung von Polymergrößen um einen Mittelwert. In einigen Fällen ist diese Heterogenität unerwünscht. Zum Beispiel die Leistung selbst relativ kleiner Polymere, wie Photoresists, und Polyacrylat Detergenzien (-5000 MW) steigt, wenn der Polydispersitätsindex (PDI) sinkt. Es wird auch allgemein angenommen, dass die Erhöhung der Polymerkettenlänge viele physikalischen Eigenschaften verbessert, insbesondere die mechanischen Eigenschaften. Allerdings sind die technischen Herausforderungen der Synthese Polymere mit niedrigen PDI typischerweise stärker ausgeprägt, wenn man versucht, größere Polymere zu synthetisieren.

### Aufgabe

Für viele Anwendungen von acrylatterminierten Urethanpolybutadiene ist es entscheidend, eine gute Kontrolle über die Molekulargewichtsverteilung zu haben, d.h. eine möglichst niedrige Polydispersität. Aufgabe war es, acrylatterminierte Urethanpolybutadiene zu finden, bei denen die Polydispersität so nah wie möglich an der ursprünglichen Polydispersität des hydroxyterminierten Polybutadiens ist.

### Lösung

Die Aufgabe wurde gelöst durch die Reaktion von monomerarmen 1 : 1 Monoaddukten aus reaktiven olefinischen Verbindungen und Diisocyanaten mit hydroxyterminierten Polybutadienen.

Überraschenderweise wurde gefunden, dass acrylatterminierte Urethanpolybutadiene aus monomerarmen 1 : 1 Monoaddukten aus reaktiven olefinischen Verbindungen und Diisocyanaten und hydroxyterminierten Polybutadienen eine Polydispersitätszunahme aufweisen, die kleiner als 30% ist, bezogen auf die ursprünglich zur Bildung der monomerarmen 1 : 1 Monoaddukte eingesetzten hydroxyterminierten Polybutadiene.

Gegenstand der Erfindung sind acrylatterminierte Urethanpolybutadiene, erhalten durch Umsetzung von
A) mindestens einem monomerarmen 1 : 1 Monoaddukt mit einem Gehalt an freiem Diisocyanat von unter 2,0 Gew.-%
   aus
   a1) mindestens einem aliphatischen, cycloaliphatischen und/oder araliphatischen Diisocyanat,
      und
   a2) mindestens einer reaktiven olefinischen Verbindung mit mindestens einer Methacrylatgruppe und/oder Acrylatgruppe und/oder Vinylethergruppe und mit genau einer OH-Gruppe,
   und
B) mindestens einem hydroxyterminierten Polybutadien und/oder mindestens einem teilweise oder vollständig hydrierten hydroxyterminierten Polybutadien.

Das Verhältnis der NCO-Gruppen der Komponente A) zu den OH-Gruppen der Komponente B) beträgt 1,2: 1 bis 1: 40, bevorzugt 1,2 : 1 bis 1:10 , und besonders bevorzugt 1,1:1 bis 1:3.

Die erfindungsgemäßen acrylatterminierte Urethanpolybutadiene weisen bevorzugt einen NCO-Gehalt von < 0,5 Gew.-%, bevorzugt kleiner 0,2 Gew.-%, besonders bevorzugt kleiner 0,1 Gew.-% auf.

Die Umsetzung der Komponente A) und B) kann in Gegenwart von üblichen mindestens einem Polymerisationsinhibitor C) durchgeführt werden, der vor oder während der Reaktion zugegeben wird. Es ist auch möglich, mindestens einen Polymerisationsinhibitor C) nachträglich zu Stabilisierung des acrylatterminierten Urethanpolybutadiens zuzufügen. Auch Mischungen von Inhibitoren können selbstverständlich eingesetzt werden.

Gegenstand der Erfindung sind somit auch acrylatterminierte Urethanpolybutadiene, erhalten durch Umsetzung von
A) mindestens einem monomerarmen 1 : 1 Monoaddukt mit einem Gehalt an freiem Diisocyanat von unter 2,0 Gew.-%
   aus
   a1) mindestens einem aliphatischen, cycloaliphatischen und/oder araliphatischen Diisocyanat,
      und
   a2) mindestens einer reaktiven olefinischen Verbindung mit mindestens einer Methacrylatgruppe und/oder Acrylatgruppe und/oder Vinylethergruppe und mit genau einer OH-Gruppe,
   und
B) mindestens einem hydroxyterminierten Polybutadien und/oder mindestens einem teilweise oder vollständig hydrierten hydroxyterminierten Polybutadien;
C) optional enthaltend mindestens einen Polymerisationsinhibitor C).

Die Klassifizierung eines breit und eng verteilten Standards basiert auf dem Polydispersitätsindex, auch Polydispersität genannt, PD = Mw/Mn.

Die erfindungsgemäße Umsetzung von monomerarmen 1 : 1 Monoaddukten und hydroxyterminierten Polybutadienen führt zu Produkten, die eine Polydispersitätszunahme von maximal 30 % zeigen, bevorzugt maximal 20 %, besonders bevorzugt maximal 10 %, bezogen auf die ursprünglich zur Bildung der monomerarmen 1 : 1 Monoaddukte eingesetzten hydroxyterminierten Polybutadiene.

Die monomerarmen 1 : 1 Monoaddukte A) mit einem Gehalt an freiem Diisocyanat von unter 2,0 Gew.-% können wie zum Beispiel in der EP 2 367 864 beschrieben, hergestellt werden, aus den Ausgangsverbindungen:
a1) mindestens einem aliphatischen, cycloaliphatischen und/oder araliphatischen Diisocyanat in einer Menge von 1 - 20 mol,
   und
a2) 1 mol mindestens einer reaktiven olefinischen Verbindung mit mindestens einer Methacrylatgruppe und/oder Acrylatgruppe und/oder Vinylethergruppe und mit genau einer OH-Gruppe,

erhalten durch Umsetzung in einem Temperaturbereich von 40 - 120 °C und wobei anschließend das nicht umgesetzte Diisocyanat durch eine Kurzwegdestillation bei 80 - 220 °C/0,01 - 10 mbar vom Reaktionsprodukt abgetrennt wird,
wobei die Kurzwegdestillation in Gegenwart
a3) mindestens eines Inhibitors, welcher über mindestens eine gegenüber NCO-Gruppen reaktive funktionelle Gruppe verfügt, erfolgt.

Die monomerarmen 1 : 1 Monoaddukte A) aus Diisocyanaten a1) und reaktiven olefinischen Verbindungen a2) mit einem Gehalt an freiem Diisocyanat von unter 2 Gew.-%, werden prinzipiell erhalten durch Umsetzung von 1 - 20, bevorzugt 1 - 5 mol, besonders bevorzugt 1,5 - 4 mol Diisocyanat a1), mit 1 mol einer reaktiven olefinischen Verbindung a2) in einem Temperaturbereich von 40 - 120 °C, bevorzugt 40 - 80 °C, wobei die Reaktion bis zum vollständigen Umsatz der reaktiven olefinischen Verbindung a2) durchgeführt wird und anschließend das nicht umgesetzte Diisocyanat durch eine Kurzwegdestillation bei 80 - 220 °C und einem Druck von 0,01 - 10 mbar vom Reaktionsprodukt abgetrennt wird. Die speziellen Inhibitoren a3) werden entweder vor, und/oder während und/oder nach der Reaktion zugegeben.
Die Entfernung des überschüssigen Diisocyanates erfolgt destillativ in Kurzwegverdampfern, vorzugsweise unter Verwendung von Dünnschichtverdampfern, oder Fallfilmverdampfern. Die Destillation wird bei 80 - 220 °C, bevorzugt bei 100 - 180 °C und einem Druck von 0,01 - 10 mbar, bevorzugt 0,05 bis 5 mbar. Bei dem Kurzwegverdampfer kann es sich z. B. um eine Glas- Emaille oder auch Metallapparatur handeln. Die so erhaltenen monomerarmen 1 : 1 Monoaddukte haben einen Gehalt an monomeren Diisocyanaten von weniger als 2 Gew.-%, bevorzugt kleiner 0,5 Gew.-%.

Falls die Reaktion in einem Lösemittel durchgeführt wird, wird dieses Lösemittel vor der Abtrennung des Restmonomergehaltes durch Destillation entfernt.

Als Isocyanate a1) eignen sich aliphatische, cycloaliphatische und araliphatische, d. h. arylsubstituierte aliphatische Diisocyanate, wie sie beispielsweise im Houben-Weyl, Methoden der organischen Chemie, Band 14/2, Seiten 61 - 70 und im Artikel von W. Siefken, Justus Liebigs Annalen der Chemie 562, 75 - 136, beschrieben werden, wie 1,2-Ethylendiisocyanat, 1,4-Tetramethylendiisocyanat, 1,6-Hexamethylendiisocyanat (HDI), 2,2,4-Trimethyl-1,6-hexamethylendiisocyanat (TMDI), 2,4,4-Trimethyl-1,6-hexamethylendiisocyanat (TMDI), 1,9-Diisocyanato-5-methylnonan, 1,8-DÜsocyanato-2,4-dimethyloctan, 1,12-Dodecandiisocyanat, ω,ω'-Diisocyanatodipropylether, Cyclobuten-1,3-diisocyanat, Cyclohexan-1,3-diisocyanat, Cyclohexan-1,4-diisocyanat, 3-Isocyanatomethyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalin-2,5-ylendimethylendiisocyanat, Decahydro-8-methyl-(1,4-methanol-naphthalin-3,5-ylendimethylendiisocyanat, Hexahydro-4,7-methano-indan-1,5- ylendimethylendiisocyanat, Hexahydro-4,7-methano-indan-2,5- ylendimethylendiisocyanat, Hexahydro-4,7-methano-indan-1,6-ylendimethylendiisocyanat, Hexahydro-4,7-methano-indan-2,5-ylendimethylendiisocyanat, Hexahydro-4,7-methanoindan-1,5-ylendiisocyanat, Hexahydro-4,7-methanoindan-2,5-ylendiisocyanat, Hexahydro-4,7-methanoindan-1,6-ylendiisocyanat, Hexahydro-4,7-methanoindan-2,6-ylendiisocyanat, 2,4-Hexahydrotoluylendiisocyanat, 2,6-Hexahydrotoluylendiisocyanat, 4,4'-Methylendicyclohexyldiisocyanat (4,4'-H₁₂MDI), 2,2'-Methylendicyclohexyl-diisocyanat (2,2'-H₁₂MDI), 2,4-Methylendicyclohexyldiisocyanat (2,4-H₁₂MDI) oder auch Mischungen dieser Isomere, 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzol, 1,4-Diisocyanatomethyl-2,3,5,6-tetramethylbenzol, 2-Methyl-1,5-diisocyanatopentan (MPDI), 2-Ethyl-1,4-diisocyanatobutan, 1,10-Diisocyanatodecan, 1,5-Diisocyanatohexan, 1,3 Diisocyanatomethylcyclohexan, 1,4-Diisocyanatomethylcyclohexan, M-Xylylendiisocyanat (MXDI), m-Tetramethylxylendiiocyanat (m-TMXDI). Es können auch sowie beliebige Gemische dieser Verbindungen eingesetzt werden.

Weitere geeignete Isocyanate werden in dem genannten Artikel in den Annalen auf Seite 122 f. beschrieben. Auch 2,5-Bis(isocyanatomethyl)bicyclo[2.2.1]heptan (NBDI)und/oder (2,6)-Bis(isocyanatomethyl)bicyclo[2.2.1]heptan (NBDI) ist in Reinsubstanz oder als Mischkomponente geeignet. Auch Mischungen können selbstverständlich eingesetzt werden.

Die Herstellung dieser Diisocyanate wird heutzutage in der Regel entweder über die Phosgenroute oder über das Harnstoffverfahren durchgeführt. Die Produkte beider Methoden sind gleichermaßen für die Verwendung im erfindungsgemäßen Verfahren geeignet.

Besonders bevorzugt werden aliphatischen und cycloaliphatischen Diisocyanate eingestzt. Ganz besonders bevorzugt werden Diisocyanate ausgewählt aus IPDI, TMDI, HDI, H₁₂MDI sowie die H₁₂MDI-Isomerengemische, eingesetzt. Auch Mischungen können selbstverständlich eingesetzt werden.

Geeignete reaktive olefinische Verbindungen a2) sind alle Verbindungen, die sowohl mindestens eine Methacrylatgruppe und/oder Acrylatgruppe und/oder Vinylethergruppe tragen, als auch genau eine Hydroxylgruppe. Weitere Bestandteile können aliphatische, cycloaliphatische, aromatische oder heterocyclische Alkylgruppen sein. Auch Oligomere oder Polymere sind geeignet.

Bevorzugt werden Hydroxyethylacrylat, Hydroxypropylacrylat, Hydroxybutylacrylat und Hydroxyethylmethacrylat, Hydroxypropylmethacrylat, Hydroxybutylmethacrylat, Glycerindiacrylat, Pentaerythroltriacrylat, Trimethylolpropandiacrylat, Glycerindimethacrylat, Pentaerythroltrimethacrylat und Trimethylolpropandimethacrylat sowie Hydroxyethylvinylether, Hydroxypropylvinylether, Hydroxybutylvinylether Hydroxypentylvinylether und/oder Hydroxyhexylvinylether eingesetzt. Auch Mischungen können selbstverständlich eingesetzt werden. Besonders bevorzugt wird Hydroxyethylacrylat verwendet.

Einbaubare Inhibitoren a3) verfügen über nicht aromatische gegenüber NCO reaktive funktionelle Gruppen, bevorzugt Hydroxy-, Thiol- oder Amingruppen, die mit Isocyanaten kovalente Bindungen eingehen können. An aromatische Gruppen gebundene reaktive funktionelle Gruppen dieser Art reagieren zwar auch mit NCO-Gruppen, werden aber bei den Destillationsbedingungen in der Regel wieder abgespalten und sind daher nicht für den Einbau geeignet. In Frage kommen also alle Verbindungen, die handelsüblich als Polymerisationsinhibitoren eingesetzt werden (siehe folgendes Kapitel), aber darüber hinaus noch über nicht aromatische gegenüber Isocyanaten reaktive Gruppen, bevorzugt Hydroxy-, Thiol- oder Amingruppen, verfügen. Bevorzugt sind die reaktiven funktionellen Gruppen an einem aliphatischen oder cycloaliphatischen Kohlenwasserstoffrest gebunden. Solche Verbindungen werden beispielsweise beschrieben in US 4,260,832 und GB 226 47 08. In Frage kommen z. B. 3,5-Di-tert-butyl-4-hydroxybenzylalkohol, 3-(3,5-Di-tert-butyl-4-hydroxyphenyl)propanol, 4-(3,5-Di-tert-butyl-4-hydroxyphenyl)butanol, 5-(3,5-Di-tert-butyl-4-hydroxyphenyl)pentanol, 6-(3,5-Di-tert-butyl-4-hydroxyphenyl)hexanol, 3-tert-butyl-5-methyl-4-hydroxybenzylalkohol, 3-(3,5-Di-tert-butyl-4-hydroxyphenyl)propanol, 4-(3-tert-butyl-5-methyl-4-hydroxyphenyl)butanol, 5-(3-tert-butyl-5-methyl-4-hydroxyphenyl)pentanol, 6-(3-tert-butyl-5-methyl-4-hydroxyphenyl)hexanol, 3,5-Di-tert-butyl-4-hydroxybenzylalkohol, 3-(3,5-Di-tert-butyl-4-hydroxyphenyl)propanol, 4-(3,5-Dimethyl-4-hydroxyphenyl)butanol, 5-(3,5-Di- Dimethyl-4-hydroxyphenyl)pentanol, 6-(3,5-Dimethyl-4-hydroxyphenyl)hexanol allein oder in Mischungen. Bevorzugt wird 3,5-Di-tert-butyl-4-hydroxybenzylalkohol eingesetzt.
Die Anwesenheit von weiteren handelsüblichen Polymerisationsinhibitoren (Antioxidantien) ist vorteilhaft.

### Hydroxyterminiertes Polybutadien B)

Im Rahmen der vorliegenden Erfindung werden hydroxyterminierte Polybutadiene B) für die Umsetzung mit den vorab beschriebenen monomerarmen Addukten eingesetzt. Diese können nicht hydriert oder auch in teilweiser oder vollständig hydrierter Form eingesetzt werden.

In einer besonders bevorzugten Ausführungsform der vorliegenden Erfindung umfasst das hydroxyterminierte Polybutadien die aus 1,3-Butadien abgeleiteten Monomereinheiten 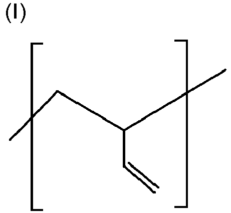 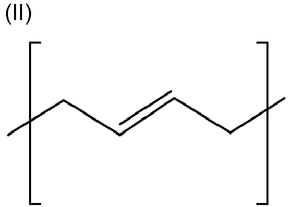 und 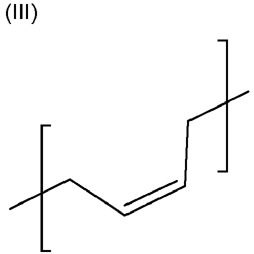 wobei der Anteil von (I) an der im Polybutadien enthaltenen aus 1,3-Butadien abgeleiteten Gesamtheit der Monomereinheiten 10 bis 60 Molprozent beträgt, und wobei die Summe der Anteile von (II) und (III) an der Gesamtheit der im Polybutadien enthaltenen aus 1,3-Butadien abgeleiteten Monomereinheiten 40 bis 90 Molprozent beträgt.

Bei dem vorab genannten hydroxyterminierten Polybutadien handelt es sich um ein durch radikalische Polymerisation von 1,3-Butadien erzeugtes Polybutadien mit Hydroxygruppen, jeweils umfassend die im Polybutadien enthaltenen aus 1,3-Butadien abgeleiteten Monomereinheiten (I), (II) und (III), wobei eine eckige Klammer bei der in dieser Anmeldung gewählten formelmäßigen Darstellung der im Polybutadien enthaltenen aus 1,3-Butadien abgeleiteten Monomereinheiten (I), (II) und (III) zeigt, dass die mit der jeweiligen eckigen Klammer versehene Bindung nicht etwa mit einer Methylgruppe endet, sondern dass die entsprechende Monomereinheit über diese Bindung mit einer weiteren Monomereinheit oder einer Hydroxygruppe verbunden ist. Die Monomereinheiten (I), (II) und (III) können dabei in beliebiger Reihenfolge im Polymer angeordnet sein. Bevorzugt ist eine statistische Anordnung.

In einer bevorzugten Ausführungsform beträgt der Anteil von (I), (II) und (III) an der Gesamtheit der im Polybutadien enthaltenen aus 1,3-Butadien abgeleiteten Monomereinheiten jeweils und unabhängig voneinander wenigstens 10 Mol-%.
Insbesondere bevorzugt beträgt der Anteil von (I) an der Gesamtheit der im Polybutadien enthaltenen aus 1,3-Butadien abgeleiteten Monomereinheiten 15 bis 30 Mol-%, der Anteil von (II) an der Gesamtheit der im Polybutadien enthaltenen aus 1,3-Butadien abgeleiteten Monomereinheiten 50 bis 70 Mol-% und der Anteil von (III) an der Gesamtheit der im Polybutadien enthaltenen aus 1,3-Butadien abgeleiteten Monomereinheiten 15 bis 30 Mol-%. Das mittlere Molekulargewicht, bestimmt durch Gelpermeationschromatographie, der hydroxyterminierten Polybutadiene liegt typischerweise zwischen 500 und 10.000 g/mol, bevorzugt zwischen 1000 und 5.000 g/mol, besonders bevorzugt zwischen 1500 und 4000 g/mol.

In einer bevorzugten Ausführungsform können neben den im Polybutadien enthaltenen aus 1,3-Butadien abgeleiteten Monomereinheiten (I), (II) und (III) auch noch andere Monomereinheiten enthalten sein, insbesondere solche, die nicht aus 1,3-Butadien abgeleitet sind. In einer bevorzugten Ausführungsform stellt die Gesamtheit der im Polybutadien enthaltenen aus 1,3-Butadien abgeleiteten Monomereinheiten (I), (II) und (III)jedoch einen Anteil an der Gesamtheit der in dem Polymer eingebauten Monomereinheiten, umfassend die aus 1,3-Butadien abgeleiteten und andere, von wenigstens 80, bevorzugt 90, noch bevorzugter 95, am bevorzugtesten 100 Molprozent dar.

Die erfindungsgemäß eingesetzten hydroxyterminierten Polybutadiene B) werden mittels radikalischer Polymerisation, beispielsweise durch Polymerisation von 1,3-Butadien in Anwesenheit von Wasserstoffperoxid, Wasser und einem organischen Lösungsmittel hergestellt. Geeignete Verfahren sind beispielsweise in EP 2 492 292 beschrieben.

Die im Rahmen der vorliegenden Erfindung vorzugsweise einsetzbaren Polybutadiene B) sind kommerziell erhältlich, beispielsweise als POLYVEST^{®} HT von der Evonik Resource Efficiency GmbH.

Gegenstand der Erfindung ist auch ein Verfahren zur Herstellung von acrylatterminierten Urethanpolybutadienen durch Umsetzung von
A) mindestens einem monomerarmen 1 : 1 Monoaddukt mit einem Gehalt an freiem Diisocyanat von unter 2,0 Gew.-%
   aus
   a1) mindestens einem aliphatischen, cycloaliphatischen und/oder araliphatischen Diisocyanat,
      und
   a2) mindestens einer reaktiven olefinischen Verbindung mit mindestens einer Methacrylatgruppe und/oder Acrylatgruppe und/oder Vinylethergruppe und mit genau einer OH-Gruppe,
   und
B) mindestens einem hydroxyterminierten Polybutadien, und/oder mindestens einem teilweise oder vollständig hydrierten hydroxyterminierten Polybutadien;
C) optional in Gegenwart mindestens eines Polymerisationsinhibitor C).

Die Umsetzung von Polyisocyanaten mit reaktiven hydroxyterminierten Polymeren beinhaltet die Reaktion der freien NCO-Gruppen mit Hydroxylgruppen und wurde schon häufig beschrieben (EP 0 669 353, EP 0 669 354, DE 30 30 572, EP 0 639 598 oder EP 0 803 524). Diese Reaktion kann entweder mit aber auch ohne Lösemittel stattfinden. Sie wird in der Regel in einem Temperaturbereich zwischen 40 - 120 °C bevorzugt 40 und 80 °C durchgeführt und lässt sich vorteilhaft durch gängige in der Urethanchemie bekannte Katalysatoren, wie z. B. metallorganische Verbindungen, wie z. B. Dibutylzinndilaurat (DBTL), Dibutylzinndineodecanoat, Zinkoctoat, oder Bismuthneodecanoat; aber auch tertiäre Amine, z. B. Triethylamin oder Diazabicyclooctan usw., katalysieren. Als Reaktionsaggregate eignen sich alle üblichen Apparaturen, Kessel, StatikMischer, Extruder usw., vorzugsweise Aggregate, die über eine Misch- oder Rührfunktion verfügen. Das Verhältnis der NCO-Gruppen der Komponente A zu den OH-Gruppen der Komponente B) beträgt 1,2 : 1 bis 1: 40, bevorzugt 1,2 : 1 bis 1:10 , und besonders bevorzugt 1,1 : 1 bis 1:3.

Die Herstellung kann sowohl durch gemeinsame Vorlage aller Reaktanden, als auch durch schrittweise oder kontinuierliche Zugabe eines oder mehrerer Reaktanden erfolgen. Wurden Lösungsmittel verwendet, können diese unter reduziertem Druck durch Evaporation entfernt werden.

Die acrylatterminierten Urethanpolybutadiene aus monomerarmen 1 : 1 Monoaddukten A) und hydroxyterminierten Polybutadienen B), werden erhalten durch Umsetzung in einem Temperaturbereich von 40 - 120 °C, bevorzugt 40 - 80 °C, wobei die Reaktion bis zum vollständigen Umsatz der NCO-Gruppen des Monoaddukts A) durchgeführt wird.

Optional kann jede Art von üblichen Polymerisationsinhibitoren C) während der Reaktion sowie nachträglich zu Stabilisierung des Produkts addiert werden. Auch Mischungen von Inhibitoren können selbstverständlich eingesetzt werden.
Als Inhibitoren eignen sich beispielsweise phenolhaltige, Chinonhaltige, P-haltige, S-haltige oder N-O haltige Inhibitoren. Beispiele dafür sind Brenzcatechin, 4-Methoxyphenol, 4-tert.-Butyloxyphenol, 4-Benzyloxyphenol, α-Naphthol, ß-Naphthol, Phenothiazin, 10-10-Dimethyl-9,10-dihydroacridin, Bis-[2-hydroxy-5-methyl-3-cyclohexylphenyl]-methan, Bis-[2-hydroxy-5-methyl-3-tert.-butylphenyl]-methan, Hydrochinon, Pyrogallol, 3,4-Dihydroxy-1-tert.-butylbenzol, 4-Methoxy-2(bzw. 3)-tert.-butylphenol (BHA), BHA auch in Kombination mit Bis-[2-carboxy-ethyl]-sulfid (TDPA), 4-Methyl-2,6-di-tert.-butylphenol (BHT), Bis-[4-hydroxy-2-methyl-5-tert.-butylphenyl]-sulfid, 4-Butylmercaptomethyl-2,6-di-tert.-butylphenol, 4-Hydroxy-3,5-di-tert.-butyl¬phenylmethansulfonsäure-dioctadecyl¬ester, 2,5-Dihydroxy-1-tert.-butylbenzol, 2,5-Dihydroxy-1,4-di-tert.-butylbenzol, 3,4-Dihydroxy-1-tert.-butylbenzol und 2,3-Dimethyl-1,4-bis-[3,4-dihydroxyphenyl]-butan. Auch alle handelsüblichen organischen oder anorganischen N-O haltigen Verbindungen kommen in Frage.

Die phenolischen Antioxidantien können auch mit Phosphorigsäureestern gemäß unten stehender Formel A kombiniert werden, wobei X Sauerstoff oder Schwefel ist, und wobei R¹, R² und R³ gleiche oder verschiedene Alkyl-, Alkylen-(1)-yl-, Aryl- oder Aralkylreste mit jeweils 1 - 20 C-Atomen repräsentieren.

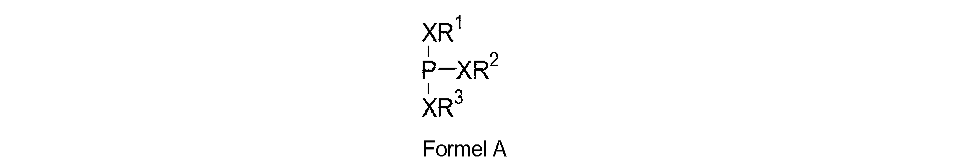

Die phenolischen Antioxidantien können auch mit Thioethern oder Aminen, wie beispielsweise 2-Anilinonaphthalin (PBN), 1-Anilinonaphthalin (PAN) oder 1,4-Dianilinobenzol kombiniert werden. Natürlich können auch marktübliche Substanzen eingesetzt werden, die aufgrund ihres chemischen Aufbaus mehrere polymerisationsinhibierende Prinzipien in sich vereinigen, wie z.B. 2,2'-Thiobis-(4-tert.-octylphenol). Bevorzugt kommen Phenothiazin, 2,6-Di-tert.-butyl-4-(4,6-bis(octylthio)-1,3,5-triazin-2-ylaminophenol und 4-Methyl-2,6-di-tert.-butyl-phenol und 4,4'-Methylen-bis-2,6-di-tert.-butylphenol zum Einsatz. Die Menge dieser Komponente C, falls vorhanden, liegt zwischen 0,001 und 3 Gew.-% bezogen auf die Summe der Komponenten A) und B).

Die erfindungsgemäßen acrylatterminierten Urethanpolybutadiene weisen bevorzugt einen NCO-Gehalt von < 0,5 Gew.-%, bevorzugt kleiner 0,2 Gew.-%, besonders bevorzugt kleiner 0,1 Gew.-% auf.

Die erfindungsgemäße Umsetzung von monomerarmen 1 : 1 Monoaddukten und hydroxyterminierten Polybutadienen führt zu Produkten, die eine Polydispersitätszunahme von maximal 30 % zeigen, bevorzugt maximal 20 %, besonders bevorzugt maximal 10 % bezogen auf die ursprünglich zur Bildung der monomerarmen 1 : 1 Monoaddukte eingesetzten hydroxyterminierten Polybutadiene.

Die Produkte die in diesem Patent beschrieben wurden, können in verschiedenen Anwendung wie Klebstoffe, Lack, Dichtstoffe, Kunststoffe und Komposite verwenden werden. Die niedrige Zunahme an Polydispersität resultiert in eine genauere Struktur der modifizierten Polybutadiene mit definierten und kontrollierbaren bzw. steuerbaren Eigenschaften.

### Beispiele

| **Einsatzstoffe** | **Produktbeschreibung, Hersteller** |
|---|---|
| VESTANAT^{®} IPDI | Isophorondiisocyanat, Evonik Industries AG, Coatings & Additives |
| HEA | Hydroxyethylacrylat, Aldrich |
| DBTL | Dibutylzinndilaurat, Urethanisierungskatalysator, Aldrich |
| POLYVEST^{®} HT | Hydroxyterminiertes Polybutadien, Polydispersität PD = 2,10, Evonik Resource Efficiency GmbH, OH Zahl = 46-50 mg KOH/g |
| BHT | 4-methyl-2,6-di-tert.-butylphenol |
| VESTANAT^{®} EP DC 1241 | monomerarmes 1 : 1 Monoaddukt aus IPDI und HEA, Monomer-Gehalt IPDI 0,05%, Evonik Resource Efficiency GmbH, |

### Beispiel 1

### Herstellung eines konventionellen acrylatterminiertem Urethanpolybutadien, nicht erfindungsgemäß

### A)

Eine intensiv gerührte Mischung aus 222 g (1 mol) IPDI, und 0,05g DBTL, wird mit 2,2 g (0,5 Gew.-%) BHT, wird tropfenweise mit 116 g (1 Mol) Hydroxyethylacrylat (HEA) versetzt, wobei trockene Luft über die Lösung geleitet wird. Nach Beendigung der Zugabe wird bei 70 °C so lange weitergerührt, bis ein vollständiger Umsatz der Alkoholkomponente Hydroxyethylacrylat erfolgt ist (In der Regel 2 - 4 h). Auch während dieser Reaktionszeit wird trockene Luft übergeleitet. Das Produkt hat eine NCO Zahl von 11,8 %.

### B)

Anschließend wurden 77,11 g POLYVEST HT und 0,05 Gew.-% des Katalysators (DBTL) unter Stickstoff in einem Dreihalsrundkolben ausgestattet mit Tropftrichter und Thermometer vorgelegt und auf 60 °C erhitzt. Nach Erreichen der Temperatur wurden 22,85 g des in A) beschriebenen Produktes aus IPDI und HEA über den Tropftrichter unter Rühren hinzugefügt und die Reaktionsmischung für drei Stunden gerührt. Das Ende der Reaktion wurde durch Bestimmung des Restisocyanatgehalts (NCO < 0.1 Gew.-%) via Titration ermittelt.
GPC (Polystyrol Standard): Mₙ=3.206 g/mol; M_{w}= 10.180 g/mol;
PD=3,17
Polydispersitätszunahme = 53%

### Beispiel 2

### Herstellung eines acrylatterminiertem Urethanpolybutadien mit Verwendung eines monomerarmen 1 : 1 Monoadduktes, erfindungsgemäß (POLYVEST EP-AT)

77,11 g POLYVEST HT und 0,05 Gew.-% des Katalysators (DBTL) wurden unter Stickstoff in einem Dreihalsrundkolben ausgestattet mit Tropftrichter und Thermometer vorgelegt und auf 60 °C erhitzt. Nach Erreichen der Temperatur wurden 22,85 g VESTANAT EP DC 1241 (NCO Zahl von 11,6 %, ein Gewichtsanteil von 0,05 % IPDI) über den Tropftrichter unter Rühren hinzugefügt und die Reaktionsmischung für drei Stunden gerührt. Das Ende der Reaktion wurde durch Bestimmung des Restisocyanatgehalts (NCO < 0,1 Gew.-%) via Titration ermittelt.
GPC (Polystyrol Standard): Mₙ=3.716 g/mol; M_{w}= 7.165 g/mol.
PD=2,13
Polydispersitätszunahme = 3%

Diese Ergebnisse zeigen, dass die Verwendung von monomerarmen 1 : 1 Monoaddukten für die Herstellung von acrylatterminierten Urethanpolybutadienen gemäß Beispiel 2 zu einer Polydispersitätszunahme von < 30 % führt, während die herkömmliche Verwendung von Diisocyanaten und Hydroxyalkylacrylaten gemäß Beispiel 1 zu einer Polydispersitätszunahme des Endprodukts von > 50 % führt.

### Methoden

### Gelpermeationschromatie (GPC)

Die Messungen wurden bei 40°C in Tetrahydrofuran (THF) bei einer Konzentration von 1 g/L und einer Flussrate von 0,3ml/min durchgeführt. Zur chromatographischen Trennung wurden eine Vorsäule des Typs PSS SDV Micro 5µ / 4,6 x 30 mm und eine Trennsäule des Typs PSS SDV Micro linear S5µ / 4,6 x 250 mm (2x) verwendet. Die Detektion erfolgte mittels RI-Detektor. Die Kalibration wurde mittels Polybutadienstandards (PSS-Kit Polybutadien-1,4, Mp 831-106000, Part No.:PSS-bdfkit, Mn: 1830/4330/9300/18000/33500) durchgeführt.

Die Ermittlung der Molekulargewichte Mn und Mw erfolgen durch eine computerunterstützte Auswertung der Chromatogramme. Der Polydispersitätsindex (PDI) berechnet sich aus dem Quotienten aus Mn und Mw.

### NCO Zahl

Die Messungen wurden mit einem Titrator (Titrando 905 von Metrohm) und einer n-Butylaminlösung (1 N) durchgeführt.

### Monomergehalt (% IPDI)

Das restliche % an IPDI wurde mit GC (Gas Chromatographie) bestimmt. Zur chromatographischen Trennung wurde eine Fused Silica Kapillarsäule verwendet. Die Detektion erfolgte mittels FID-Detektor. Die Kalibration wurde mittels IPDI und n-Tetradecan als innerem Standard durchgeführt.

## Patentansprüche

1. Acrylatterminierte Urethanpolybutadiene, erhalten durch Umsetzung von
A) mindestens einem monomerarmen 1 : 1 Monoaddukt mit einem Gehalt an freiem Diisocyanat von unter 2,0 Gew.-%
aus
a1) mindestens einem aliphatischen, cycloaliphatischen und/oder araliphatischen Diisocyanat,
und
a2) mindestens einer reaktiven olefinischen Verbindung mit mindestens einer Methacrylatgruppe und/oder Acrylatgruppe und/oder Vinylethergruppe und mit genau einer OH-Gruppe,
und
B) mindestens einem hydroxyterminierten Polybutadien und/oder mindestens einem teilweise oder vollständig hydrierten hydroxyterminierten Polybutadien.

2. Acrylatterminierte Urethanpolybutadiene nach Anspruch 1, erhalten durch Umsetzung von
A) mindestens einem monomerarmen 1 : 1 Monoaddukt mit einem Gehalt an freiem Diisocyanat von unter 2,0 Gew.-%
aus
a1) mindestens einem aliphatischen, cycloaliphatischen und/oder araliphatischen Diisocyanat,
und
a2) mindestens einer reaktiven olefinischen Verbindung mit mindestens einer Methacrylatgruppe und/oder Acrylatgruppe und/oder Vinylethergruppe und mit genau einer OH-Gruppe,
und
B) mindestens einem hydroxyterminierten Polybutadien und/oder mindestens einem teilweise oder vollständig hydrierten hydroxyterminierten Polybutadien;
C) optional enthaltend mindestens einen Polymerisationsinhibitor C).

3. Acrylatterminierte Urethanpolybutadiene nach Anspruch 1 oder 2, wobei das Verhältnis der NCO-Gruppen der Komponente A) zu den OH-Gruppen der Komponente B) 1,2: 1 bis 1: 40 , bevorzugt 1,2 : 1 bis 1:10 , und besonders bevorzugt 1,1:1 bis 1:3 beträgt.

4. Acrylatterminierte Urethanpolybutadiene nach mindestens einem der vorherigen Ansprüche, wobei die acrylatterminierte Urethanpolybutadiene einen NCO-Gehalt von < 0,5 Gew.-%, bevorzugt kleiner 0,2 Gew.-%, besonders bevorzugt kleiner 0,1 Gew.-% aufweisen.

5. Acrylatterminierte Urethanpolybutadiene nach mindestens einem der vorherigen Ansprüche, wobei diese eine Polydispersitätszunahme von maximal 30 %, bevorzugt maximal 20 %, besonders bevorzugt maximal 10 %, bezogen auf die ursprünglich zur Bildung der monomerarmen 1 : 1 Monoaddukte eingesetzten hydroxyterminierten Polybutadiene, aufweisen.

6. Acrylatterminierte Urethanpolybutadiene nach mindestens einem der vorherigen Ansprüche, wobei als a1) Diisocyanate ausgewählt aus IPDI, TMDI, HDI, H₁₂MDI sowie die H₁₂MDI-Isomerengemische, eingesetzt werden.

7. Acrylatterminierte Urethanpolybutadiene nach mindestens einem der vorherigen Ansprüche, wobei als a2) Verbindungen ausgewählt aus, Verbindungen, die sowohl mindestens eine Methacrylat- oder Acrylatfunktion oder Vinylethergruppe, und genau eine Hydroxylgruppe aufweisen.

8. Acrylatterminierte Urethanpolybutadiene nach mindestens einem der vorherigen Ansprüche, wobei als a2) Verbindungen ausgewählt aus Hydroxyethylacrylat, Hydroxypropylacrylat, Hydroxybutylacrylat und Hydroxyethylmethacrylat, Hydroxypropylmethacrylat, Hydroxybutylmethacrylat, Glycerindiacrylat, Pentaerythroltriacrylat, Trimethylolpropandiacrylat, Glycerindimethacrylat, Pentaerythroltrimethacrylat, Trimethylolpropandimethacrylat, Hydroxyethylvinylether, Hydroxypropylvinylether, Hydroxybutylvinylether Hydroxypentylvinylether und/oder Hydroxyhexylvinylether eingesetzt werden.

9. Acrylatterminierte Urethanpolybutadiene nach mindestens einem der vorherigen Ansprüche, wobei das mittlere Molekulargewicht, bestimmt durch Gelpermeationschromatographie, der hydroxyterminierten Polybutadiene B) zwischen 500 und 10.000 g/mol, bevorzugt zwischen 1000 und 5.000 g/mol, besonders bevorzugt zwischen 1500 und 4000 g/mol, liegt.

10. Acrylatterminierte Urethanpolybutadiene nach mindestens einem der vorherigen Ansprüche, wobei das hydroxyterminierte Polybutadien B) die aus 1,3 Butadien abgeleiteten Monomereinheiten umfasst: 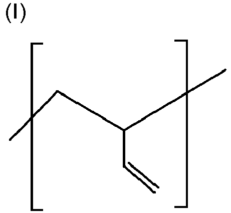 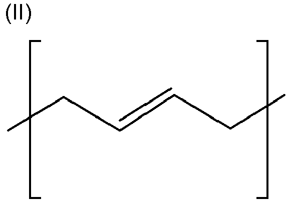 Und 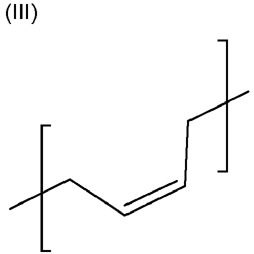 wobei der Anteil von (I) an der im Polybutadien enthaltenen aus 1,3-Butadien abgeleiteten Gesamtheit der Monomereinheiten 10 bis 60 Molprozent beträgt, und wobei die Summe der Anteile von (II) und (III) an der Gesamtheit der im Polybutadien enthaltenen aus 1,3-Butadien abgeleiteten Monomereinheiten 40 bis 90 Molprozent beträgt.

11. Acrylatterminierte Urethanpolybutadiene nach mindestens einem der vorherigen Ansprüche, wobei hydroxyterminierte Polybutadiene B) mit einem Anteil von (I) an der Gesamtheit der im Polybutadien enthaltenen aus 1,3-Butadien abgeleiteten Monomereinheiten 15 bis 30 Mol-%, mit einem Anteil von (II) an der Gesamtheit der im Polybutadien enthaltenen aus 1,3 Butadien abgeleiteten Monomereinheiten 50 bis 70 Mol-% und mit einem Anteil von (III) an der Gesamtheit der im Polybutadien enthaltenen aus 1,3 Butadien abgeleiteten Monomereinheiten 15 bis 30 Mol-%, eingesetzt werden.

12. Verfahren zur Herstellung von acrylatterminierten Urethanpolybutadienen Urethanpolybutadiene nach mindestens einem der vorherigen Ansprüche, durch Umsetzung von
A) mindestens einem monomerarmen 1 : 1 Monoaddukt mit einem Gehalt an freiem Diisocyanat von unter 2,0 Gew.-%
aus
a1) mindestens einem aliphatischen, cycloaliphatischen und/oder araliphatischen Diisocyanat,
und
a2) mindestens einer reaktiven olefinischen Verbindung mit mindestens einer Methacrylatgruppe und/oder Acrylatgruppe und/oder Vinylethergruppe und mit genau einer OH-Gruppe,
und
B) mindestens einem hydroxyterminierten Polybutadien und/oder mindestens einem teilweise oder vollständig hydrierten hydroxyterminierten Polybutadien;
C) optional in Gegenwart mindestens eines Polymerisationsinhibitor C).

13. Verfahren nach Anspruch 12, wobei die Umsetzung in einem Temperaturbereich von 40 - 120 °C, bevorzugt 40 - 80 °C, durchgeführt wird.
